# EUROPÄISCHE PATENTSCHRIFT

(11) **EP 4 032 252 B1**
(45) Veröffentlichungstag und Bekanntmachung des Hinweises auf die Patenterteilung: **04.09.2024**
(21) Anmeldenummer: 21708216.3
(22) Anmeldetag: 25.02.2021
(51) Int. Cl.: B29C 64/20, B29C 64/386, B22F 10/80, G05B 19/4099, H04L 67/12, H04L 67/00, B33Y 50/00, H04L 9/40

(54) **VERFAHREN UND VORRICHTUNG ZUM BETRIEB EINER ADDITIVEN FERTIGUNGSEINRICHTUNG**
METHOD AND DEVICE FOR OPERATING AN ADDITIVE MANUFACTURING DEVICE
PROCÉDÉ ET DISPOSITIF POUR FAIRE FONCTIONNER UN DISPOSITIF DE FABRICATION ADDITIVE

(30) Priorität: 26.02.2020 DE 102020105052
(43) Veröffentlichungstag der Anmeldung: 27.07.2022
(73) Patentinhaber: Schubert Additive Solutions GmbH, 74564 Crailsheim (DE)
(72) Erfinder: SCHINDLER, Marcus, 74523 Schwäbisch Hall (DE); BRENNER, Jörg, 74586 Frankenhardt (DE)
(74) Vertreter: Hafner & Kohl PartmbB
(86) Internationale Anmeldenummer: PCT/EP2021/054745
(87) Internationale Veröffentlichungsnummer: WO 2021/170751

(56) Entgegenhaltungen:
- EP-A2- 2 946 524
- WO-A2-2015/022572

## Beschreibung

Die Erfindung betrifft ein Verfahren zum Betrieb einer additiven Fertigungseinrichtung einer eine oder mehrere additive Fertigungseinrichtungen umfassenden Fertigungsumgebung.

Zum Betrieb additiver Fertigungseinrichtungen in einer entsprechenden in eine oder mehrere additive Fertigungseinrichtungen umfassenden Fertigungsumgebung, welche eine Anzahl an additiven Fertigungseinrichtungen umfasst, sind aus dem Stand der Technik verschiedene Ansätze bekannt. Wesentlich ist dabei typischerweise, dass der Betrieb der jeweiligen additiven Fertigungseinrichtungen auf Grundlage von den Betrieb der additiven Fertigungseinrichtung betreffende Daten gesteuert wird. Mithin bedarf es zum Betrieb der jeweiligen additiven Fertigungseinrichtungen einer datenmäßigen Übertragung von den Betrieb einer jeweiligen additiven Fertigungseinrichtung betreffenden Daten auf eine jeweilige additive Fertigungseinrichtung.

Bis dato ist es üblich, die den Betrieb einer jeweiligen additiven Fertigungseinrichtung betreffender Daten über eine lokale Netzwerkumgebung der jeweiligen Fertigungsumgebung, d. h. z. B. über ein lokales Firmennetzwerk, wie z. B. ein LAN-Netzwerk oder ein Ethernet-Netzwerk, auf die jeweilige additive Fertigungseinrichtung zu übertragen. Die jeweiligen additiven Fertigungseinrichtungen sind sonach datenmäßig typischerweise an eine lokale Netzwerkumgebung angeschlossen.

Die lokale Netzwerkumgebung dient jedoch typischerweise nicht allein zur Übertragung entsprechender Daten an jeweilige additive Fertigungseinrichtungen, sondern auch der Übertragung anderer, gegebenenfalls auch nicht fertigungsbezogener, Daten zwischen anderen an das Firmennetzwerk angeschlossenen, gegebenenfalls auch nicht fertigungsbezogenen, hardware- und/oder softwaremäßig implementierten Einrichtungen, wie z. B. Organisations-, Rechen- oder Verwaltungseinrichtungen, der Fertigungsumgebung.

Bisweilen erfolgt sogar der komplette firmeninterne Datenverkehr über eine entsprechende lokale Netzwerkumgebung, sodass über die lokale Netzwerkumgebung von verschiedenen Nutzern auch auf verschiedene, über die lokale Netzwerkumgebung kommunizierende Einrichtungen zugegriffen werden kann.

Diese Konfiguration ist insbesondere im Hinblick auf den Betrieb additiver Fertigungseinrichtungen einer entsprechenden Fertigungsumgebung verbesserungswürdig, als, z. B. im Hinblick auf eine gewünschte Bauteil- und Prozessqualität, typischerweise sichergestellt werden soll, dass den Betrieb jeweiliger additiver Fertigungseinrichtungen betreffende Daten nicht modifiziert, gestohlen, etc. werden können.

EP 2 946 524 A2 offenbart ein sicheres Streaming-Verfahren in einem numerisch gesteuerten Fertigungssystem und ein sicheres numerisch gesteuertes Fertigungssystem.

WO 2015/022572 A2 offenbart eine optimierte virtuelle 3D-Druck-Baukastenbelegung.

Der Erfindung liegt die Aufgabe zugrunde, ein demgegenüber verbessertes Verfahren zum Betrieb einer additiven Fertigungseinrichtung einer eine oder mehrere additive Fertigungseinrichtungen umfassenden Fertigungsumgebung anzugeben.

Die Aufgabe wird durch ein Verfahren zum Betrieb wenigstens einer additiven Fertigungseinrichtung einer eine oder mehrere additive Fertigungseinrichtungen umfassenden Fertigungsumgebung gemäß Anspruch 1 gelöst. Die hierzu abhängigen Ansprüche betreffen mögliche Ausführungsformen des Verfahrens.

Die Erfindung ist durch die Gegenstände der beigefügten Ansprüche definiert. Ein erster Aspekt der hierin beschriebenen Erfindung betrifft ein Verfahren zum Betrieb wenigstens einer additiven Fertigungseinrichtung einer eine oder mehrere additive Fertigungseinrichtungen umfassenden Fertigungsumgebung. Das Verfahren dient insbesondere zum Steuern des Betriebs wenigstens einer additiven Fertigungseinrichtung einer eine oder mehrere additive Fertigungseinrichtungen umfassenden Fertigungsumgebung.

Das Verfahren richtet sich grundsätzlich an den Betrieb bzw. die Steuerung des Betriebs jedweder additiver Fertigungseinrichtungen (regelmäßig auch als 3D-Drucker bezeichnet). Unter einer verfahrensgemäß betreibbaren bzw. betriebenen additiven Fertigungseinrichtung ist sonach grundsätzlich jedwede Einrichtung zu verstehen, welche zur additiven Herstellung eines oder mehrerer dreidimensionaler Bauteile, wie z. B. technischer Bauteile oder technischer Bauteilgruppen, eingerichtet ist. Der eigentliche mit der/den jeweiligen verfahrensgemäß betreibbaren bzw. betriebenen additiven Fertigungseinrichtung(en) konkret ausführbare additive Fertigungsprozess ist für die Durchführung des Verfahrens, wenn überhaupt, nur von nachrangiger Bedeutung. Entsprechend wird in diesem Zusammenhang rein beispielhaft auf FDM-Einrichtungen, d. h. additive Fertigungseinrichtungen, welche zur Durchführung von Fused-Deposition-Modelling-Prozessen (FDM-Prozessen) eingerichtet sind, bzw. FFF-Einrichtungen, d. h. additive Fertigungseinrichtungen, welche zur Durchführung von Fused-Filament-Fabrication-Prozessen (FFF-Prozessen) eingerichtet sind, als mögliche verfahrensgemäß betreibbare bzw. betriebene additive Fertigungseinrichtungen verwiesen.

Der Betrieb jeweiliger additiver Fertigungseinrichtungen erfolgt verfahrensgemäß auf Grundlage von den Betrieb der jeweiligen additiven Fertigungseinrichtungen betreffenden Daten. Unter dem Begriff Daten können auch Datensätze können auch Datensätze verstanden werden. Entsprechende Daten bzw. Datensätze können grundsätzlich jedwede Daten bzw. Datensätze sein bzw. solche umfassen, welche den Betrieb der jeweiligen additiven Fertigungseinrichtung(en) direkt oder indirekt steuern. Bei entsprechenden Daten bzw. Datensätzen kann es sich sonach insbesondere um anlagenspezifische Parameter, d. h. insbesondere Parameter, welche wenigstens eine Konfiguration der/den jeweiligen additiven Fertigungseinrichtung(en) betreffen, und/oder um bauteilspezifische Parameter, d. h. insbesondere Parameter, welche wenigstens ein mit der/den jeweiligen additiven Fertigungseinrichtung(en) herzustellendes Bauteil betreffen, und/oder um prozessspezifische Parameter, d. h. insbesondere Parameter, welche wenigstens einen mit der/den jeweiligen additiven Fertigungseinrichtung(en) durchführbaren Prozess betreffen, handeln.

Entsprechende Daten bzw. Datensätze können Kombinationen einer oder mehrerer anlagenspezifischer Parameter und/oder einer oder mehrerer bauteilspezifischer Parameter und/oder einer oder mehrerer prozessspezifischer Parameter sein bzw. solche umfassen. Entsprechende Kombinationen können sich auf einen mit wenigstens einer bestimmten additiven Fertigungseinrichtung durchführbaren bestimmten additiven Fertigungsprozess eines bestimmten Bauteils definierter Bauteileigenschaften beziehen.

Entsprechende Daten bzw. Datensätze werden verfahrensgemäß typischerweise über eine externe Datenspeichereinrichtung, d. h. typischerweise über eine keinen netzwerkmäßigen Bestandteil der jeweiligen Fertigungsumgebung bildende Datenspeichereinrichtung, bereitgestellt bzw. von einer solchen abgerufen. Eine entsprechende externe Datenspeichereinrichtung ist entsprechend typischerweise nicht mit einer lokalen Netzwerkumgebung, sofern vorhanden, der jeweiligen Fertigungsumgebung verbunden. Mithin besteht typischerweise keine Möglichkeit, eine datenmäßige Verbindung zwischen der externen Datenspeichereinrichtung und einer lokalen Netzwerkumgebung, sofern vorhanden, der jeweiligen Fertigungsumgebung auszubilden. Bei einer lokalen Netzwerkumgebung der jeweiligen Fertigungsumgebung kann es sich z. B. um ein Firmennetzwerk handeln.

Bei einer entsprechenden externen Datenspeichereinrichtung kann es sich z. B. um eine Netzwerkspeichereinrichtung, d. h. insbesondere um eine externe Servereinrichtung, wie z. B. eine Cloud-Servereinrichtung, handeln. Eine entsprechende externe Datenspeichereinrichtung kann sonach z. B. mit dem Internet verbunden sein.

Verfahrensgemäß können entsprechende Daten bzw. Datensätze von einem Bereitsteller bereitgestellt werden. Bei einem Bereitsteller kann es sich z. B. um den Hersteller der jeweiligen additiven Fertigungseinrichtung(en) der Fertigungsumgebung und/oder um einen Entwickler von bestimmten in der Fertigungsumgebung additiv zu fertigenden Bauteilen und/oder um einen Entwickler von bestimmte in der Fertigungsumgebung additiv zu fertigende Bauteile betreffenden Baudaten handeln. Im Allgemeinen kann es sich bei einem entsprechenden Bereitsteller um eine natürliche und/oder juristische Person handeln, welche, z. B. um unerwünschte Modifikationen entsprechender Daten bzw. Datensätze und/oder um Diebstahl entsprechender Daten bzw. Datensätze zu vermeiden, verhindern möchte, dass entsprechende Daten bzw. Datensätze über eine außerhalb seiner Kontrolle liegende Netzwerkverbindung, wie z. B. über eine lokale Netzwerkumgebung, sofern vorhanden, einer jeweiligen Fertigungsumgebung, übertragen werden.

In der Folge kann eine entsprechende externe Datenspeichereinrichtung unter der Kontrolle eines Bereitstellers entsprechender Daten bzw. Datensätze liegen. Ein Bereitsteller entsprechender Daten bzw. Datensätze kann sonach den Zugang zu den in der jeweiligen externen Datenspeichereinrichtung hinterlegten Daten bzw. Datensätzen und/oder Änderungen der in der in der jeweiligen externen Datenspeichereinrichtung hinterlegten Daten bzw. Datensätze kontrollieren; mithin kann ein Bereitsteller entsprechender Daten bzw. Datensätze z. B. Zugangs- und/oder Änderungsberechtigungen zum Zugang zu den und/oder zur Änderung der in der in der jeweiligen externen Datenspeichereinrichtung hinterlegten Daten bzw. Datensätzen erteilen. Entsprechende Zugangs- bzw. Änderungsberechtigungen können bestimmten Autorisierungs- und/oder Beschränkungskriterien unterliegen; entsprechende Zugangs- bzw. Änderungsberechtigungen können sonach z. B. örtlich und/oder zeitlich und/oder auf sonstige Weise autorisiert bzw. beschränkt sein, sodass nur bei Erfüllen bestimmter Autorisierungs- und/oder Beschränkungskriterien - in diesem Zusammenhang sind auch Bezahlkriterien, d. h. die erfolgte Zahlung einer bestimmten Gebühr für einen Zugang zu den in der externen Datenspeichereinrichtung hinterlegten Daten bzw. Datensätzen - eine Zugangsmöglichkeit zu den bzw. eine Änderungsmöglichkeit der in der jeweiligen externen Datenspeichereinrichtung hinterlegten Daten bzw. Datensätze gewährt wird.

Wesentlich für die Übertragung von Daten bzw. Datensätzen zwischen einer entsprechenden externen Datenspeichereinrichtung unter einer jeweiligen additiven Fertigungseinrichtung ist, dass hierfür verfahrensgemäß eine separate bzw. gesonderte Datenverbindung zur Übertragung von den Betrieb der additiven Fertigungseinrichtung betreffenden Daten bzw. Datensätzen von der jeweiligen externen Datenspeichereinrichtung verwendet wird. Die Datenübertragung entsprechender Daten bzw. Datensätze von der jeweiligen externen Datenspeichereinrichtung auf die jeweilige(n) additive(n) Fertigungseinrichtung(en) erfolgt verfahrensgemäß sonach über wenigstens eine separate bzw. gesonderte Datenverbindung. Mit anderen Worten wird verfahrensgemäß wenigstens eine separate bzw. gesonderte Datenverbindung, d. h. insbesondere eine von einer gegebenenfalls vorhandenen lokalen Netzwerkumgebung unabhängige Datenverbindung, zwischen der jeweiligen externen Datenspeichereinrichtung und der oder den jeweiligen additiven Fertigungseinrichtung(en) ausgebildet, über welche Daten bzw. Datensätze von der jeweiligen externen Datenspeichereinrichtung auf die jeweilige(n) additive(n) Fertigungseinrichtung(en) übertragen werden. Die jeweilige(n) separaten bzw. gesonderten Datenverbindung(en) zwischen der jeweiligen externen Datenspeichereinrichtung und der oder den jeweiligen additiven Fertigungseinrichtung(en) ist bzw. sonach von sämtlichen anderen, gegebenenfalls vorhandenen, Datenverbindungsmöglichkeiten der jeweiligen Fertigungsumgebung, wie z. B. einer lokalen Netzwerkumgebung, sofern vorhanden, abgekapselt bzw. abgeschirmt; mithin besteht keine Verbindungsmöglichkeit zwischen der/den jeweilige(n) separaten bzw. gesonderten Datenverbindung(en) und anderen Datenverbindungen der jeweiligen Fertigungsumgebung, wie z. B. einer lokalen Netzwerkumgebung, sofern vorhanden. Die zwischen der/den jeweilige(n) additive(n) Fertigungseinrichtung(en) und der jeweiligen externen Datenspeichereinrichtung ausgebildete separate bzw. gesonderte Datenverbindung ist sonach eine autarke Datenverbindung.

Dies bedeutet, dass die jeweilige(n) additive(n) Fertigungseinrichtung(en) verfahrensgemäß typischerweise nur über die jeweilige(n) separate(n) bzw. gesonderte(n) Datenverbindung(en) mit der jeweiligen externen Datenspeichereinrichtung verbindbar oder verbunden sind und umgekehrt. Die jeweilige(n) additive(n) Fertigungseinrichtung(en) sind verfahrensgemäß sonach typischerweise nicht mit anderen, gegebenenfalls vorhandenen, Datenverbindungsmöglichkeiten der jeweiligen Fertigungsumgebung, wie z. B. einer lokalen Netzwerkumgebung, sofern vorhanden, verbunden.

Das Verfahren ist sonach aufgrund der Verwendung separater bzw. gesonderter Datenverbindungen zwischen der/den jeweiligen additiven Fertigungseinrichtung(en) und der jeweiligen externen Datenspeichereinrichtung im Hinblick auf den Betrieb der jeweiligen additiven Fertigungseinrichtung(en) verbessert, als, z. B. im Hinblick auf eine gewünschte Bauteil- und Prozessqualität, sicher gestellt werden kann, dass entsprechende den Betrieb jeweiliger additiver Fertigungseinrichtungen betreffende Daten bzw. Datensätze nicht über Datenverbindungen übertragen werden, über welche diese gegebenenfalls modifiziert, gestohlen, etc. werden können.

Aus den vorstehenden Ausführungen ergibt sich, dass die Fertigungsumgebung über eine lokale Netzwerkumgebung, wie z. B. über ein LAN-Netzwerk oder ein Ethernet-Netzwerk, verfügen kann. In diesem Fall werden entsprechende Daten bzw. Datensätze jedoch, wie angedeutet, nicht, d. h. weder direkt noch indirekt, über die lokale Netzwerkumgebung von der externen Datenspeichereinrichtung auf die jeweilige(n) additive(n) Fertigungseinrichtung(en) übertragen, sondern es wird die wenigstens eine separate bzw. gesonderte Datenverbindung verwendet. Verfahrensgemäß wird sonach eine separate bzw. gesonderte Datenverbindung verwendet, welche nicht mit einer entsprechenden lokalen Netzwerkumgebung verbindbar oder verbunden ist. Mithin erfolgt eine Datenverbindung zur Übertragung entsprechender Daten bzw. Datensätze von einer externen Datenspeichereinrichtung auf die jeweilige(n) additive(n) Fertigungseinrichtung(en) über eine zu der jeweiligen lokalen Netzwerkumgebung separate bzw. gesonderte und damit unabhängige Datenverbindung.

Eine jeweilige separate bzw. gesonderte Datenverbindung zwischen der/den jeweiligen additiven Fertigungseinrichtung(en) und der jeweiligen externen Datenspeichereinrichtung wird verfahrensgemäß über wenigstens eine zwischen die jeweiligen additiven Fertigungseinrichtung(en) und die jeweilige externe Datenspeichereinrichtung geschaltet angeordnete oder ausgebildete Gateway-Einrichtung hergestellt. Verfahrensgemäß wird sonach wenigstens eine zwischen die jeweilige(n) additive(n) Fertigungseinrichtung(en) und die jeweilige externe Datenspeichereinrichtung geschaltet angeordnete oder ausgebildete Gateway-Einrichtung verwendet. Eine entsprechende Gateway-Einrichtung ist sonach einerseits mit der jeweiligen externen Datenspeichereinrichtung verbindbar oder verbunden, sodass Daten bzw. Datensätze von der jeweiligen externen Datenspeichereinrichtung auf die Gateway-Einrichtung übertragen werden können, und andererseits mit der/den jeweiligen additiven Fertigungseinrichtung(en) verbindbar oder verbunden, sodass Daten bzw. Datensätze von der Gateway-Einrichtung auf die jeweiligen additiven Fertigungseinrichtung(en) übertragen werden können.

Selbstverständlich ist in allen Fällen über eine entsprechende separate bzw. gesonderte Datenverbindung eine bidirektionale Datenübertragung zwischen der/den jeweiligen additiven Fertigungseinrichtung(en) und der jeweiligen externen Datenspeichereinrichtung denkbar.

Eine jeweilige Gateway-Einrichtung kann mit wenigstens einer Datenspeichereinrichtung ausgestattet sein, sodass von der externen Datenspeichereinrichtung auf die jeweilige Gateway-Einrichtung übertragene Daten bzw. Datensätze in der jeweiligen Gateway-Einrichtung zwischengespeichert werden können. Die jeweilige Gateway-Einrichtung kann sonach in Funktion eines Puffers eingerichtet sein, z. B. Host- und/oder Spool-Funktion für die mit dieser verbundenen additive(n) Fertigungseinrichtung(en) zu übernehmen.

Eine entsprechende Datenspeichereinrichtung kann z. B. eine flüchtige Datenspeichereinrichtung, wie z. B. eine RAM-Datenspeichereinrichtung, eine DRAM-Datenspeichereinrichtung, eine SRAM-Datenspeichereinrichtung, eine SDRAM-Datenspeichereinrichtung, eine MRAM-Datenspeichereinrichtung, oder eine nicht-flüchtige Datenspeichereinrichtung, wie z. B. eine ROM-Datenspeichereinrichtung, eine PROM-Datenspeichereinrichtung, EPROM-Datenspeichereinrichtung, eine EEPROM-Datenspeichereinrichtung, sein oder eine solche umfassen.

Eine jeweilige Gateway-Einrichtung kann ferner mit einer hardware- und/oder softwaremäßig implementierten Steuereinrichtung zur Steuerung und Organisation von additiven Fertigungsprozessen der/den mit dieser verbundenen additiven Fertigungseinrichtung(en) ausgestattet sein. Mithin können verfahrensgemäß Fertigungsprozesse der mit einer jeweiligen Gateway-Einrichtung verbundenen additiven Fertigungseinrichtung(en) über eine entsprechend eingerichtete Steuereinrichtung der jeweiligen Gateway-Einrichtung gesteuert und/oder organisiert werden.

Wie erwähnt, erfolgt die beschriebene Ausbildung einer separaten bzw. gesonderten Datenverbindung zwischen der/den jeweiligen additiven Fertigungseinrichtung(en) und der jeweiligen externen Datenspeichereinrichtung verfahrensgemäß über eine Gateway-Einrichtung. Verfahrensgemäß kann sonach eine Gateway-Einrichtung verwendet werden, welche eingerichtet ist, eine zu der lokalen Netzwerkumgebung, sofern vorhanden, einer Fertigungsumgebung separate Netzwerkumgebung auszubilden. Insbesondere kann eine Gateway-Einrichtung verwendet werden, welche eingerichtet ist, über die zu der lokalen Netzwerkumgebung separate Netzwerkumgebung eine Datenverbindung mit der jeweiligen externen Datenspeichereinrichtung auszubilden.

Es kann verfahrensgemäß eine hardware- und/oder softwaremäßig implementierte Firewall-Einrichtung verwendet bzw. vorgesehen werden. Eine entsprechende Firewall-Einrichtung kann z. B. zwischen die Gateway-Einrichtung und die jeweilige externe Datenspeichereinrichtung geschaltet angeordnet oder ausgebildet sein. Durch die Verwendung bzw. das Vorsehen einer Firewall-Einrichtung kann die Sicherheit der zwischen der entsprechenden Gateway-Einrichtung und der jeweiligen externen Datenspeichereinrichtung ausgebildeten Datenverbindung verbessert werden.

Die Firewall-Einrichtung und die Gateway-Einrichtung können eine integrierte hardware- und/oder softwaremäßig implementierte Komponentengruppe bilden; mithin kann eine hardware- und/oder softwaremäßig implementierte Komponentengruppe verwendet werden, welche eine Gateway-Einrichtung und eine Firewall-Einrichtung umfasst.

Es kann verfahrensgemäß ferner ein virtuelles privates Netzwerk zwischen der/den jeweiligen additiven Fertigungseinrichtung(en) und der jeweiligen externen Datenspeichereinrichtung ausgebildet bzw. verwendet werden. Durch die Ausbildung bzw. Verwendung eines entsprechenden virtuellen privaten Netzwerks und somit die Ausbildung eines in sich geschlossenen Kommunikationsnetzes kann die Sicherheit der zwischen der/den jeweiligen additiven Fertigungseinrichtung(en) und der jeweiligen externen Datenspeichereinrichtung ausgebildeten Datenverbindung verbessert werden.

Ein entsprechendes virtuelles privates Netzwerk kann verfahrensgemäß insbesondere durch eine entsprechende Gateway-Einrichtung ausgebildet werden. Mithin kann verfahrensgemäß eine Gateway-Einrichtung verwendet werden, welche eingerichtet ist, ein virtuelles privates Netzwerk zwischen der wenigstens einen additiven Fertigungseinrichtung und der externen Datenspeichereinrichtung auszubilden. Derart kann die Sicherheit der zwischen der entsprechenden Gateway-Einrichtung und der jeweiligen externen Datenspeichereinrichtung ausgebildeten Datenverbindung verbessert werden.

Verfahrensgemäß wird eine drahtlose Datenverbindung zwischen der wenigstens einen additiven Fertigungseinrichtung und der externen Datenspeichereinrichtung ausgebildet. Bei der Datenverbindung zwischen der/den additiven Fertigungseinrichtung(en) und der jeweiligen externen Datenspeichereinrichtung handelt es sich sonach um eine drahtlose Datenverbindung. Eine drahtlose Datenverbindung zwischen der/den additiven Fertigungseinrichtung(en) und der externen Datenspeichereinrichtung erfolgt typischerweise über eine drahtlose Netzwerkstruktur; eine entsprechende drahtlose Netzwerkstruktur ist durch eine entsprechende Gateway-Einrichtung gebildet sein oder umfasst diese. Drahtlose Datenverbindungen werden über einen Standard für mobile Kommunikation, insbesondere 4G oder 5G, ausgebildet bzw. verwenden einen solchen. Standards für mobile Kommunikation können ausdrücklich auch so genannte Mobilfunkstandards der dritten Generation, mithin LTE-Standards, oder Erweiterungen hierzu, wie etwa LTE-Advanced bzw. 4G, sein.

Es kann verfahrensgemäß eine drahtgebundene oder eine drahtlose Datenverbindung zwischen der wenigstens einen additiven Fertigungseinrichtung und der Gateway-Einrichtung ausgebildet werden und eine drahtgebundene oder eine drahtlose Datenverbindung zwischen der Gateway-Einrichtung und der externen Datenspeichereinrichtung ausgebildet werden. Alternativ oder ergänzend kann eine verfahrensgemäß eine drahtlose Datenverbindung zwischen der wenigstens einen additiven Fertigungseinrichtung und der Gateway-Einrichtung ausgebildet wird und/oder eine drahtlose Datenverbindung zwischen der Gateway-Einrichtung und der externen Datenspeichereinrichtung ausgebildet werden.

Verfahrensgemäß kann eine entsprechende Gateway-Einrichtung auch mit wenigstens einem externen Kommunikationspartner kommunizieren bzw. datenkommunikationsmäßig mit wenigstens einem externen Kommunikationspartner verbunden werden. Bei einem externen Kommunikationspartner kann es sich z. B. um einen Hersteller der entsprechenden Gateway-Einrichtung und/oder um einen Bereitsteller der jeweiligen externen Datenspeichereinrichtung und/oder um einen Bereitsteller der in der jeweiligen externen Datenspeichereinrichtung gespeicherten Daten bzw. Datensätze handeln. Wie erwähnt, kann es sich bei Letzterem z. B. um den Hersteller der jeweiligen additiven Fertigungseinrichtung(en) der Fertigungsumgebung und/oder um einen Entwickler von bestimmten in der Fertigungsumgebung additiv zu fertigenden Bauteilen und/oder um einen Entwickler von bestimmte in der Fertigungsumgebung additiv zu fertigende Bauteile betreffenden Baudaten handeln. Mithin kann über eine entsprechende Gateway-Einrichtung z. B. eine Datenverbindung, beispielsweise zum Zwecke der Steuerung und/oder Überwachung des Betriebs wenigstens einer additiven Fertigungseinrichtung der Fertigungsumgebung, mit wenigstens einem externen Kommunikationspartner ausgebildet werden.

Es kann verfahrensgemäß eine entsprechende separate bzw. gesonderte Datenverbindung ausgebildet bzw. verwendet werden, welche verschlüsselbar oder verschlüsselt ist. Durch die Ausbildung bzw. Verwendung einer entsprechenden verschlüsselbaren bzw. verschlüsselten Datenverbindung kann die Sicherheit der zwischen der/den jeweiligen additiven Fertigungseinrichtung(en) und der jeweiligen externen Datenspeichereinrichtung ausgebildeten Datenverbindung verbessert werden. Insbesondere kann durch die Ausbildung bzw. Verwendung einer entsprechenden verschlüsselbaren bzw. verschlüsselten Datenverbindung die Sicherheit einer zwischen einer entsprechenden Gateway-Einrichtung, sofern vorhanden, und der jeweiligen externen Datenspeichereinrichtung ausgebildeten Datenverbindung verbessert werden. Zur Verschlüsselung kommt grundsätzlich jedwede Verschlüsselungsart in Betracht.

Es kann verfahrensgemäß eine entsprechende Gateway-Einrichtung verwendet werden, welche zur Verschlüsselung einer entsprechenden separaten bzw. gesonderten Datenverbindung eingerichtet ist. Die Verschlüsselung der Datenverbindung zwischen der entsprechenden Gateway-Einrichtung und der jeweiligen externen Datenspeichereinrichtung kann sonach über die entsprechende Gateway-Einrichtung erfolgen. Die entsprechende Gateway-Einrichtung kann hierfür mit einer hardware- und/oder softwaremäßig implementierten Verschlüsselungseinrichtung ausgestattet sein.

Verfahrensgemäß kann über die jeweilige externe Datenspeichereinrichtung wenigstens ein zertifizierter Datensatz, welcher von einem Bereitsteller für einen additiven Fertigungsprozess wenigstens eines bestimmten Bauteils definierter Bauteileigenschaften zertifizierte bauteilspezifische Parameter und/oder anlagenspezifische Parameter und/oder prozessspezifische Parameter beinhaltet, bereitgestellt werden. Ein entsprechender zertifizierter Datensatz beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils definierter Bauteileigenschaften erforderlich sind. Mit anderen Worten liegen in einem entsprechenden zertifizierten Datensatz sämtliche anlagenspezifischen und/oder bauteilspezifischen und/oder prozessspezifischen Informationen zur additiven Fertigung eines jeweiligen bestimmten Bauteils definierter Bauteileigenschaften, d. h. insbesondere auch maschinenlesbare Steuerinformationen zur Steuerung bzw. Regelung des Betriebs einer zur Durchführung eines additiven Fertigungsprozesses zur additiven Fertigung eines jeweiligen Bauteils definierter Bauteileigenschaften verwendeten additiven Fertigungseinrichtung, vor.

Mithin kann für jedwedes zu fertigende bzw. gefertigte Bauteil ein eigener zertifizierter Datensatz bereitgestellt werden. Dies insbesondere deshalb, als zur Realisierung bestimmter Bauteileigenschaften bestimmte anlagenspezifische Parameter und/oder bauteilspezifische Parameter und/oder prozessspezifische Parameter erforderlich sind, mithin bestimmte Bauteileigenschaften mit bestimmten anlagenspezifischen Parametern und/oder bauteilspezifischen Parametern und/oder prozessspezifischen Parametern korreliert sein können, sodass nur eine bestimmte Kombination von anlagenspezifischen Parametern und/oder bauteilspezifischen Parametern und/oder prozessspezifischen Parametern eine zuverlässige und reproduzierbare additive Fertigung eines Bauteils definierter Bauteileigenschaften ermöglicht. Hieraus ergibt sich, dass der wenigstens eine zertifizierte Datensatz typischerweise eine bestimmte Kombination von anlagenspezifischen Parametern und/oder bauteilspezifischen Parametern und/oder prozessspezifischen Parametern zur Herstellung eines bestimmten Bauteils definierter Bauteileigenschaften beinhaltet.

Eine in dem wenigstens einen zertifizierten Datensatz enthaltene bestimmte Kombination entsprechender Parameter bezieht sich dabei typischerweise auf einen mit einer bestimmten additiven Fertigungseinrichtung durchführbaren bestimmten additiven Fertigungsprozess eines bestimmten Bauteils definierter Bauteileigenschaften. Der wenigstens eine zertifizierte Datensatz beinhaltet demnach typischerweise eine für einen bestimmten, mit einer bestimmten additiven Fertigungseinrichtung durchführbaren additiven Fertigungsprozess maßgeschneiderte Kombination an anlagenspezifischen Parametern und/oder bauteilspezifischen Parametern und/oder prozessspezifischen Parametern, welche Kombination eine zuverlässige und reproduzierbare additive Fertigung eines Bauteils definierter Bauteileigenschaften ermöglicht. Mithin können sich zertifizierte Datensätze zur Fertigung von Bauteilen derselben definierten Bauteileigenschaften dennoch in wenigstens einem anlagenspezifischen Parameter und/oder bauteilspezifischen Parameter und/oder prozessspezifischen Parameter unterscheiden, sofern diese unterschiedlichen additiven Fertigungsprozessen und/oder dem Betrieb unterschiedlicher additiver Fertigungseinrichtungen zugrunde gelegt werden.

Ein jeweiliger additiver Fertigungsprozess zur Fertigung eines jeweiligen Bauteils definierter Bauteileigenschaften ohne nutzerseitigen Eingriff, insbesondere vollautomatisch, allein auf Grundlage des wenigstens einen zertifizierten Datensatzes durchgeführt werden. Das Anwenden wenigstens eines additiven Fertigungsprozesses zur additiven Fertigung wenigstens eines bestimmten Bauteils definierter Bauteileigenschaften auf Grundlage des wenigstens einen zertifizierten Datensatzes vermittels einer additiven Fertigungseinrichtung kann sonach vollautomatisiert, d. h. insbesondere ohne einen nutzerseitigen Eingriff, erfolgen.

Ein entsprechender zertifizierter Datensatz kann auch maschinenlesbare Steuerinformation zur, insbesondere vollautomatischen, Steuerung bzw. Regelung des Betriebs wenigstens einer additiven Fertigungseinrichtung zur additiven Fertigung des wenigstens einen additiv zu fertigenden Bauteils auf Grundlage des wenigstens einen zertifizierten Datensatzes beinhalten. Bei entsprechenden Steuerinformationen kann es sich z. B. um einen jeweiligen Maschinencode (G-Code) einer jeweiligen additiven Fertigungseinrichtung handeln. Entsprechende Steuerinformationen können unmittelbar oder mittelbar durch entsprechende in dem wenigstens einen zertifizierten Datensatz enthaltene anlagenspezifische Parameter und/oder bauteilspezifische Parameter und/oder prozessspezifische Parameter beschrieben werden.

Ein entsprechender zertifizierter Datensatz kann auch von einem Bereitsteller für die Vorbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhalten. Ein Nutzer benötigt sonach keine eigenen Kenntnisse über eine entsprechende vorbereitende Maßnahme, als sämtliches hierzu erforderliches "Wissen" in dem wenigstens einen zertifizierten Datensatz enthalten sein kann.

Die wenigstens eine Maßnahme zur Vorbereitung des auf Grundlage eines entsprechenden zertifizierten Datensatzes angewendeten additiven Fertigungsprozesses kann z. B. eine Maßnahme zur Vorbereitung eines im Rahmen des zur additiven Fertigung eines Bauteils bestimmter Bauteileigenschaften durchgeführten additiven Fertigungsprozesses zu verwendenden Baumaterials, insbesondere eine Temperierung, Trocknung, Inertisierung, etc. des Baumaterials, umfassen. Die Maßnahme ist typischerweise im Hinblick auf einen konkret anzuwendenden additiven Fertigungsprozess bzw. ein im Rahmen der Durchführung eines konkret anzuwendenden additiven Fertigungsprozesses konkret eingesetzten Baumaterials gewählt. Beispielsweise können z. B. pulver(bett)basierte additive Fertigungsprozesse andere vorbereitende Maßnahmen erfordern, als nicht pulver(bett)basierte additive Fertigungsprozesse.

Ein entsprechender zertifizierter Datensatz kann auch von einem Bereitsteller für die Nachbereitung des oder wenigstens eines additiven Fertigungsprozesses wenigstens eines bestimmten Bauteils definierter Bauteileigenschaften zertifizierte anlagenspezifische Parameter und/oder bauteilspezifische Parameter und/oder prozessspezifische Parameter beinhalten. Ein Nutzer benötigt sonach keine eigenen Kenntnisse über eine entsprechende nachbereitende Maßnahme, als sämtliches hierzu erforderliches "Wissen" in dem wenigstens einen zertifizierten Datensatz enthalten sein kann.

Die wenigstens eine Maßnahme zur Nachbereitung des additiven Fertigungsprozesses kann eine Maßnahme zur Nachbearbeitung des im Rahmen des auf Grundlage des wenigstens einen zertifizierten Datensatzes angewendeten additiven Fertigungsprozesses additiv gefertigten Bauteils, insbesondere eine mechanische und/oder thermische Nachbehandlung des additiv gefertigten Bauteils, wie z. B. eine zumindest abschnittsweise mechanische Oberflächenbearbeitung zur Erzeugung bestimmter Oberflächeneigenschaften, eine zumindest abschnittsweise thermische Behandlung zur Erzeugung bestimmter struktureller Eigenschaften, etc., umfassen. Die Maßnahme ist typischerweise im Hinblick auf einen konkret angewendeten additiven Fertigungsprozess bzw. ein im Rahmen der Durchführung eines konkret angewendeten additiven Fertigungsprozesses konkret eingesetzten Baumaterials gewählt. Beispielsweise können z. B. vermittels pulver(bett)basierten additiven Fertigungsprozessen gefertigte Bauteile andere nachbereitende Maßnahmen erfordern, als nicht vermittels pulver(bett)basierten additiven Fertigungsprozessen gefertigte Bauteile. Gleichermaßen können z. B. aus Metall gefertigte Bauteile andere nachbereitende Maßnahmen erfordern, als aus Kunststoff gefertigte Bauteile.

Für alle Ausführungsformen gilt, dass eine entsprechende Gateway-Einrichtung als Netzwerkgerät, d. h. als Router, ausgebildet ist oder einen Bestandteil eines solchen bilden kann. Es kommen Router in Frage, welche zur Ausbildung von drahtlosen Datenverbindungen über einen Standard für mobile Kommunikation, insbesondere LTE, 4G oder 5G, eingerichtet sind. Entsprechenden Routern kann z. B. über eine Netzwerkkarte, SIM-Karte oder dergleichen, eine Information zur Identifikation der Gateway-Einrichtung bzw. des Routers oder einer mit diesem ausgestatteten additiven Fertigungseinrichtung zugeordnet sein. Für einen Router gelten alle Ausführungen im Zusammenhang mit einer Gateway-Einrichtung analog; mithin kann ein Router z. B. eine hardware- und/oder softwaremäßig implementierte Firewall-Einrichtung und/oder eine hardware- und/oder softwaremäßig implementierte Datenspeichereinrichtung umfassen.

Eine entsprechende Gateway-Einrichtung, d. h. insbesondere ein entsprechender Router, ist an oder in einer additiven Fertigungseinrichtung angeordnet oder ausgebildet. Mithin kann eine entsprechende Gateway-Einrichtung, d. h. insbesondere ein entsprechender Router, baulich in eine additive Fertigungseinrichtung integriert sein. Eine entsprechende bauliche Integration kann z. B. derart realisiert sein, dass an oder in einem Gehäuseabschnitt der jeweiligen additiven Fertigungseinrichtung, wie z. B. an oder in einer Bodenplatte, ein, z. B. kammerartiger bzw. -förmiger, Aufnahmebereich bzw. -raum ausgebildet ist, in welchem die entsprechende Gateway-Einrichtung bzw. der Router, angeordnet oder ausgebildet ist. Ein entsprechender Aufnahmebereich bzw. -raum kann zumindest abschnittsweise, gegebenenfalls vollständig, geschlossen ausgebildet sein, um die entsprechende Gateway-Einrichtung bzw. den Router vor äußeren Einflüssen zu schützen. Ein entsprechender Aufnahmebereich bzw. -raum kann mit Befestigungsschnittstellen, d. h. insbesondere mechanischen Befestigungsschnittstellen, ausgeführt sein, welche eine (mechanisch) stabile Befestigung der entsprechenden Gateway-Einrichtung bzw. des Routers ermöglichen.

Eine entsprechend konfigurierte additive Fertigungseinrichtung umfasst sonach neben den jeweiligen Funktionskomponenten zur Durchführung eines additiven Fertigungsvorgangs, welche je nach konkreter Konfiguration der additiven Fertigungsvorgang respektive des mit dieser implementierbaren additiven Fertigungsprozesses variieren können, auch eine Gateway-Einrichtung bzw. einen Router, über welche(n) sich eine gesonderte Datenverbindung zu bzw. mit einer externen Datenspeichereinrichtung ausbilden bzw. herstellen lässt. Dies erfolgt automatisierbar bzw. automatisiert, sodass die jeweilige additive Fertigungseinrichtung eigenständig über die integrierte Gateway-Einrichtung bzw. den Router eine gesonderte Datenverbindung zu bzw. mit einer externen Datenspeichereinrichtung herstellt bzw. aufrechterhält.

Es kommen in diesem Zusammenhang Gateway-Einrichtungen bzw. Router in Frage, welche zur Ausbildung von drahtlosen Datenverbindungen über einen Standard für mobile Kommunikation, insbesondere LTE, 4G oder 5G, eingerichtet sind. Derart kann die Datenverbindung zwischen der jeweiligen additiven Fertigungseinrichtung und der externen Datenspeichereinrichtung über eine gesonderte eigenständige und von einer lokalen Netzwerkumgebung völlig unabhängige Datenverbindung ausgebildet bzw. hergestellt bzw. aufrechterhalten werden. Dies stellt einen erheblichen Sicherheitsgewinn, z. B. gegenüber Datendiebstahl, dar und vereinfacht, weil die Herstellung bzw. Aufrechterhaltung der Datenverbindung, wie erwähnt, automatisierbar bzw. automatisiert eigenständig über die additive Fertigungseinrichtung erfolgen kann, die Einrichtung der additiven Fertigungseinrichtung, denn eine Integration dieser in eine bestehende (lokale) Netzwerkumgebung ist weder erforderlich noch gewünscht.

Entsprechend konfigurierte additive Fertigungseinrichtungen können sonach einzig einen Anschluss zur Energieversorgung aufweisen, ein, z. B. buchsenartiger bzw. -förmiger, Anschluss für ein Netzwerkkabel oder dergleichen ist nicht erforderlich.

Ein zweiter Aspekt der Erfindung betrifft eine Fertigungsumgebung, umfassend wenigstens eine additive Fertigungseinrichtung und gegebenenfalls eine lokale Netzwerkumgebung. Die Fertigungsumgebung zeichnet sich durch eine Gateway-Einrichtung aus, welche eingerichtet ist, eine gesonderte Datenverbindung zu einer externen Datenspeichereinrichtung auszubilden, über welche den Betrieb der additiven Fertigungseinrichtung betreffende Daten bzw. Datensätze von der externen Datenspeichereinrichtung, d. h. insbesondere außerhalb einer lokalen Netzwerkumgebung, sofern vorhanden, der Fertigungsumgebung befindlichen externen Datenspeichereinrichtung, auf die wenigstens eine additive Fertigungseinrichtung der Fertigungsumgebung zu übertragen.

Die Gateway-Einrichtung kann wie weiter oben beschrieben konfiguriert und baulich in eine additive Fertigungseinrichtung integriert sein.

Ein dritter Aspekt der Erfindung betrifft ein Kommunikations- bzw. Datenübertragungssystem, umfassend:
- eine Fertigungsumgebung, umfassend wenigstens eine additive Fertigungseinrichtung und gegebenenfalls eine lokale Netzwerkumgebung,
- eine externe Datenspeichereinrichtung, in welcher den Betrieb der additiven Fertigungseinrichtung betreffende Daten bzw. Datensätze hinterlegbar oder hinterlegt sind,
- eine Gateway-Einrichtung, welche eingerichtet ist, eine, insbesondere zu der lokalen Netzwerkumgebung, sofern vorhanden, separate bzw. gesonderte Datenverbindung auszubilden, über welche den Betrieb der additiven Fertigungseinrichtung betreffende Daten bzw. Datensätze von der externen Datenspeichereinrichtung auf die wenigstens eine additive Fertigungseinrichtung der Fertigungsumgebung zu übertragen.

Die Gateway-Einrichtung kann wie weiter oben beschrieben konfiguriert und baulich in eine additive Fertigungseinrichtung integriert sein.

Sämtliche Aspekte im Zusammenhang mit dem Verfahren gemäß dem ersten Aspekt der Erfindung gelten analog für die Fertigungsumgebung gemäß dem zweiten Aspekt der Erfindung und für das Kommunikations- bzw. Datenübertragungssystem gemäß dem dritten Aspekt der Erfindung.

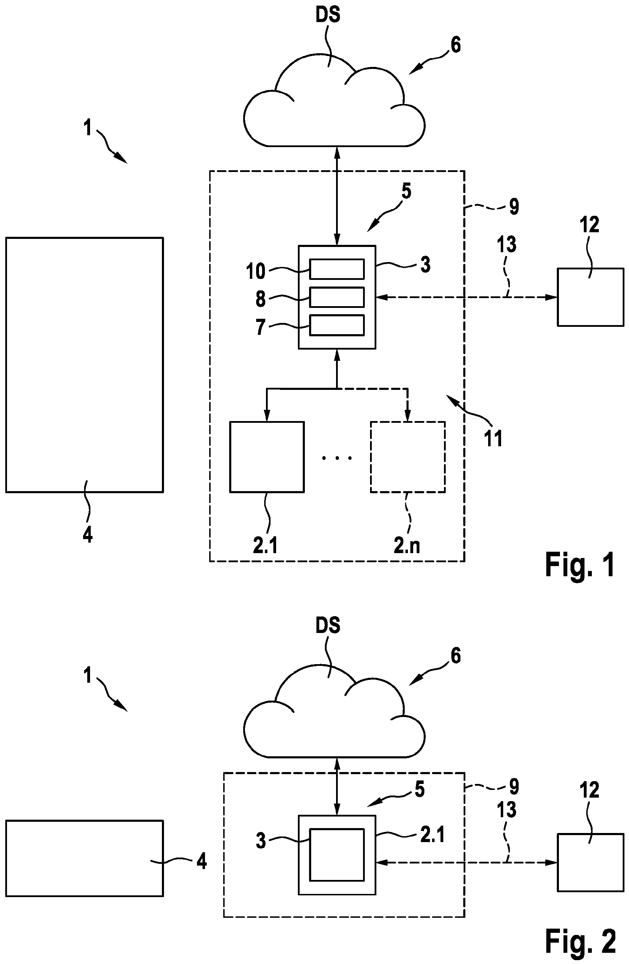

Die Erfindung ist anhand von Ausführungsbeispielen in den Zeichnungen näher erläutert. Dabei zeigt
Fig. 1, 2 jeweils eine Prinzipdarstellung einer Fertigungsumgebung gemäß einem Ausführungsbeispiel.

Fig. 1 zeigt eine Prinzipdarstellung einer Fertigungsumgebung 1 gemäß einem Ausführungsbeispiel.

Die Fertigungsumgebung 1 umfasst eine oder mehrere additive Fertigungseinrichtungen 2.1 - 2.n. Bei den additiven Fertigungseinrichtungen 2.1 - 2.n kann es sich z. B. um FDM- bzw. FFF-Einrichtungen handeln.

Die Fertigungsumgebung 1 umfasst zudem eine Gateway-Einrichtung 3, welche eingerichtet ist, eine, insbesondere zu einer lokalen Netzwerkumgebung 4 (optional), wie z. B. ein Firmennetzwerk, der Fertigungsumgebung 1 separate bzw. gesonderte Datenverbindung 5 auszubilden, über welche den Betrieb der additiven Fertigungseinrichtung(en) 2.1 - 2.n betreffende Daten bzw. Datensätze von einer externen Datenspeichereinrichtung 6 auf die additive(n) Fertigungseinrichtung(en) 2.1 - 2.n der Fertigungsumgebung 1 zu übertragen.

Die in Fig. 1 gezeigte beispielhafte Konfiguration kann sonach gleichermaßen als Kommunikationssystem bezeichnet bzw. erachtet werden, welches durch die additiven Fertigungseinrichtung(en) 2.1 - 2.n, die Gateway-Einrichtung 3 und die externe Datenspeichereinrichtung 6 gebildet ist bzw. diese umfasst.

Mit der in Fig. 1 gezeigten Konfiguration lässt sich ein Verfahren zum Betrieb wenigstens einer additiven Fertigungseinrichtung 2.1 - 2.n der Fertigungsumgebung 1 implementieren. Das Verfahren dient insbesondere zum Steuern des Betriebs wenigstens einer additiven Fertigungseinrichtung 2.1 - 2.n der Fertigungsumgebung 1.

Der Betrieb jeweiliger additiver Fertigungseinrichtungen 2.1 - 2.n erfolgt verfahrensgemäß auf Grundlage von den Betrieb der jeweiligen additiven Fertigungseinrichtungen 2.1 - 2.n betreffenden Daten bzw. Datensätzen DS. Entsprechende Daten bzw. Datensätze DS können grundsätzlich jedwede Daten bzw. Datensätze sein bzw. solche umfassen, welche den Betrieb der jeweiligen additiven Fertigungseinrichtung(en) 2.1 - 2.n direkt oder indirekt steuern. Bei entsprechenden Daten bzw. Datensätzen DS kann es sich sonach insbesondere um anlagenspezifische Parameter, d. h. insbesondere Parameter, welche wenigstens eine Konfiguration der/den jeweiligen additiven Fertigungseinrichtung(en) 2.1 - 2.n betreffen, und/oder um bauteilspezifische Parameter, d. h. insbesondere Parameter, welche wenigstens ein mit der/den jeweiligen additiven Fertigungseinrichtung(en) 2.1 - 2.n herzustellendes Bauteil betreffen, und/oder um prozessspezifische Parameter, d. h. insbesondere Parameter, welche wenigstens einen mit der/den jeweiligen additiven Fertigungseinrichtung(en) 2.1 - 2.n durchführbaren Prozess betreffen, handeln.

Entsprechende Daten bzw. Datensätze DS werden verfahrensgemäß über die externe Datenspeichereinrichtung 6, welche keinen netzwerkmäßigen Bestandteil der Fertigungsumgebung 1 bildet, bereitgestellt bzw. von dieser abgerufen. Die externe Datenspeichereinrichtung 6 ist entsprechend nicht mit der lokalen Netzwerkumgebung 4 der Fertigungsumgebung 1 verbunden. Mithin besteht keine Möglichkeit, eine datenmäßige Verbindung zwischen der externen Datenspeichereinrichtung 6 und der lokalen Netzwerkumgebung 4 der Fertigungsumgebung 4 auszubilden.

Bei der externen Datenspeichereinrichtung 6 handelt es sich in dem Ausführungsbeispiel um eine Netzwerkspeichereinrichtung, d. h. insbesondere um eine externe Servereinrichtung, wie z. B. eine Cloud-Servereinrichtung. Die externe Datenspeichereinrichtung 6 kann sonach mit dem Internet verbunden sein.

Entsprechende Daten bzw. Datensätze DS können von einem Bereitsteller bereitgestellt werden. Bei einem Bereitsteller kann es sich z. B. um den Hersteller der jeweiligen additiven Fertigungseinrichtung(en) 2.1 - 2.n der Fertigungsumgebung 1 und/oder um einen Entwickler von bestimmten in der Fertigungsumgebung 1 additiv zu fertigenden Bauteilen und/oder um einen Entwickler von bestimmte in der Fertigungsumgebung 1 additiv zu fertigende Bauteile betreffenden Baudaten handeln. Bei einem entsprechenden Bereitsteller kann es sich entsprechend um eine natürliche und/oder juristische Person handeln, welche, z. B. um unerwünschte Modifikationen entsprechender Daten bzw. Datensätze DS und/oder um Diebstahl entsprechender Daten bzw. Datensätze DS zu vermeiden, verhindern möchte, dass entsprechende Daten bzw. Datensätze DS über eine außerhalb seiner Kontrolle liegende Netzwerkverbindung, wie z. B. über die lokale Netzwerkumgebung 4 der Fertigungsumgebung 1, übertragen werden.

In der Folge kann die externe Datenspeichereinrichtung 6 unter der Kontrolle eines Bereitstellers entsprechender Daten bzw. Datensätze DS liegen. Ein Bereitsteller entsprechender Daten bzw. Datensätze DS kann sonach den Zugang zu den in der externen Datenspeichereinrichtung 6 hinterlegten Daten bzw. Datensätzen DS und/oder Änderungen der in der in der externen Datenspeichereinrichtung 6 hinterlegten Daten bzw. Datensätze DS kontrollieren; mithin kann ein Bereitsteller entsprechender Daten bzw. Datensätze DS z. B. Zugangs- und/oder Änderungsberechtigungen zum Zugang zu den und/oder zur Änderung der in der in der externen Datenspeichereinrichtung 6 hinterlegten Daten bzw. Datensätzen DS erteilen. Entsprechende Zugangs- bzw. Änderungsberechtigungen können bestimmten Autorisierungs- und/oder Beschränkungskriterien unterliegen; entsprechende Zugangs- bzw. Änderungsberechtigungen können sonach z. B. örtlich und/oder zeitlich und/oder auf sonstige Weise autorisiert bzw. beschränkt sein, sodass nur bei Erfüllen bestimmter Autorisierungs- und/oder Beschränkungskriterien - in diesem Zusammenhang sind auch Bezahlkriterien, d. h. die erfolgte Zahlung einer bestimmten Gebühr für einen Zugang zu den in der externen Datenspeichereinrichtung hinterlegten Daten bzw. Datensätzen DS - eine Zugangsmöglichkeit zu den bzw. eine Änderungsmöglichkeit der in der externen Datenspeichereinrichtung 6 hinterlegten Daten bzw. Datensätze DS gewährt wird.

Wesentlich für die Übertragung von Daten bzw. Datensätzen DS zwischen der externen Datenspeichereinrichtung 6 unter einer jeweiligen additiven Fertigungseinrichtung 2.1 - 2.n ist, dass hierfür die separate bzw. gesonderte Datenverbindung 5 verwendet wird. Die Datenübertragung entsprechender Daten bzw. Datensätze DS von der externen Datenspeichereinrichtung 6 auf die jeweilige(n) additive(n) Fertigungseinrichtung(en) 2.1 - 2.n erfolgt sonach über die separate bzw. gesonderte Datenverbindung 5. Mit anderen Worten wird eine separate bzw. gesonderte Datenverbindung 5, d. h. insbesondere eine von der lokalen Netzwerkumgebung 4 unabhängige Datenverbindung, zwischen der externen Datenspeichereinrichtung 6 und der/den jeweilige(n) additiven Fertigungseinrichtung(en) 2.1 - 2.n ausgebildet, über welche Daten bzw. Datensätze DS von der externen Datenspeichereinrichtung 6 auf die jeweilige(n) additive(n) Fertigungseinrichtung(en) 2.1 - 2.n übertragen werden. Die separate bzw. gesonderte Datenverbindung 5 zwischen der externen Datenspeichereinrichtung 6 und der/den jeweiligen additiven Fertigungseinrichtung(en) 2.1 - 2.n ist bzw. sonach von sämtlichen anderen, gegebenenfalls vorhandenen, Datenverbindungsmöglichkeiten der Fertigungsumgebung 1, d. h. insbesondere von der lokalen Netzwerkumgebung 4, abgekapselt bzw. abgeschirmt; mithin besteht keine Verbindungsmöglichkeit zwischen der/den jeweilige(n) separaten bzw. gesonderten Datenverbindung 5 und anderen Datenverbindungen der Fertigungsumgebung 1, d. h. insbesondere der lokalen Netzwerkumgebung 4. Die zwischen der/den jeweilige(n) additive(n) Fertigungseinrichtung(en) 2.1 - 2.n und der externen Datenspeichereinrichtung 6 ausgebildete separate bzw. gesonderte Datenverbindung 6 ist sonach eine autarke Datenverbindung.

Dies bedeutet, dass die jeweilige(n) additive(n) Fertigungseinrichtung(en) 2.1 - 2.n nur über die separate bzw. gesonderte Datenverbindung 5 mit der externen Datenspeichereinrichtung 6 verbindbar oder verbunden sind und umgekehrt. Die jeweilige(n) additive(n) Fertigungseinrichtung(en) 2.1 - 2.n sind sonach nicht mit anderen, gegebenenfalls vorhandenen, Datenverbindungsmöglichkeiten der Fertigungsumgebung 1, wie insbesondere der lokalen Netzwerkumgebung 4, verbunden.

Das Verfahren ist sonach aufgrund der Verwendung separater bzw. gesonderter Datenverbindungen zwischen der/den jeweiligen additiven Fertigungseinrichtung(en) 2.1 - 2.n und der externen Datenspeichereinrichtung 6 im Hinblick auf den Betrieb der jeweiligen additiven Fertigungseinrichtung(en) 2.1 - 2.n verbessert, als, z. B. im Hinblick auf eine gewünschte Bauteil- und Prozessqualität, sicher gestellt werden kann, dass entsprechende den Betrieb jeweiliger additiver Fertigungseinrichtungen 2.1 - 2.n betreffende Daten bzw. Datensätze DS nicht über Datenverbindungen übertragen werden, über welche diese gegebenenfalls modifiziert, gestohlen, etc. werden können.

Die separate bzw. gesonderte Datenverbindung 5 zwischen der/den jeweiligen additiven Fertigungseinrichtung(en) 2.1 - 2.n und der externen Datenspeichereinrichtung 6 ist in dem Ausführungsbeispiel über die zwischen die jeweiligen additiven Fertigungseinrichtung(en) 2.1 - 2.n und die externe Datenspeichereinrichtung 6 geschaltet angeordnete oder ausgebildete Gateway-Einrichtung 3 hergestellt. Verfahrensgemäß wird sonach die zwischen die jeweilige(n) additive(n) Fertigungseinrichtung(en) 2.1 - 2.n und die externe Datenspeichereinrichtung 6 geschaltet angeordnete oder ausgebildete Gateway-Einrichtung 3 verwendet. Die Gateway-Einrichtung 3 ist sonach einerseits mit der externen Datenspeichereinrichtung 6 verbindbar oder verbunden, sodass Daten bzw. Datensätze DS von der externen Datenspeichereinrichtung 6 auf die Gateway-Einrichtung 3 übertragen werden können, und andererseits mit der/den jeweiligen additiven Fertigungseinrichtung(en) 2.1 - 2.n verbindbar oder verbunden, sodass Daten bzw. Datensätze DS von der Gateway-Einrichtung 3 auf die jeweiligen additiven Fertigungseinrichtung(en) 2.1 - 2.n übertragen werden können.

Selbstverständlich ist in allen Fällen über die separate bzw. gesonderte Datenverbindung 5 eine bidirektionale Datenübertragung zwischen der/den jeweiligen additiven Fertigungseinrichtung(en) 2.1 - 2.n und der externen Datenspeichereinrichtung 6 denkbar.

Die Gateway-Einrichtung 3 kann mit wenigstens einer Datenspeichereinrichtung 7 ausgestattet sein, sodass von der externen Datenspeichereinrichtung 6 auf die Gateway-Einrichtung 3 übertragene Daten bzw. Datensätze DS in der Gateway-Einrichtung 3 zwischengespeichert werden können. Die Gateway-Einrichtung 3 kann sonach in Funktion eines Puffers eingerichtet sein, z. B. Host- und/oder Spool-Funktion für die mit dieser verbundenen additive(n) Fertigungseinrichtung(en) zu übernehmen.

Die Gateway-Einrichtung 3 kann ferner mit einer hardware- und/oder softwaremäßig implementierten Steuereinrichtung 8 zur Steuerung und Organisation von additiven Fertigungsprozessen der/den mit dieser verbundenen additiven Fertigungseinrichtung(en) 2.1 - 2.n ausgestattet sein. Mithin können verfahrensgemäß Fertigungsprozesse der mit der Gateway-Einrichtung 3 verbundenen additiven Fertigungseinrichtung(en) 2.1 - 2.n über eine entsprechend eingerichtete Steuereinrichtung 8 der Gateway-Einrichtung 8 gesteuert und/oder organisiert werden.

Wie erwähnt, kann die beschriebene Ausbildung einer separaten bzw. gesonderten Datenverbindung 5 zwischen der/den jeweiligen additiven Fertigungseinrichtung(en) 2.1 - 2.n und der externen Datenspeichereinrichtung 6 die Gateway-Einrichtung 3 erfolgen. Die verwendete Gateway-Einrichtung 3 kann sonach eingerichtet sein, eine zu der lokalen Netzwerkumgebung 4 separate Netzwerkumgebung 9 auszubilden. Die Gateway-Einrichtung 3 kann insbesondere eingerichtet sein, über die zu der lokalen Netzwerkumgebung 4 separate Netzwerkumgebung 9 die Datenverbindung 5 mit der externen Datenspeichereinrichtung 6 auszubilden.

Verfahrensgemäß kann eine hardware- und/oder softwaremäßig implementierte Firewall-Einrichtung 10 verwendet werden. Die Firewall-Einrichtung 10 kann zwischen die Gateway-Einrichtung 3 und die externe Datenspeichereinrichtung 6 geschaltet angeordnet oder ausgebildet sein. Durch die Verwendung bzw. das Vorsehen einer Firewall-Einrichtung 10 kann die Sicherheit der zwischen der Gateway-Einrichtung 3 und der externen Datenspeichereinrichtung 6 ausgebildeten Datenverbindung 5 verbessert werden.

In dem Ausführungsbeispiel bilden die Firewall-Einrichtung 10 und die Gateway-Einrichtung 3 beispielhaft eine integrierte hardware- und/oder softwaremäßig implementierte Komponentengruppe.

Verfahrensgemäß kann ein virtuelles privates Netzwerk 11 zwischen der/den jeweiligen additiven Fertigungseinrichtung(en) 2.1 - 2.n und der externen Datenspeichereinrichtung 6 ausgebildet werden. Durch die Ausbildung eines entsprechenden virtuellen privaten Netzwerks 11 und somit die Ausbildung eines in sich geschlossenen Kommunikationsnetzes kann die Sicherheit der zwischen der/den jeweiligen additiven Fertigungseinrichtung(en) 2.1 - 2.n und der externen Datenspeichereinrichtung 6 ausgebildeten Datenverbindung 5 verbessert werden.

Ein entsprechendes virtuelles privates Netzwerk 11 kann durch die Gateway-Einrichtung 3 ausgebildet werden.

Die separate bzw. gesonderte Datenverbindung 5 zwischen der/den jeweiligen additiven Fertigungseinrichtung(en) 2.1 - 2.n und der externen Datenspeichereinrichtung 6 wird als eine drahtlose Datenverbindung ausgebildet. Eine drahtlose Datenverbindung erfolgt typischerweise über eine drahtlose Netzwerkstruktur, welche durch die Gateway-Einrichtung 3 gebildet oder diese umfassen kann. Drahtlose Datenverbindungen werden über einen Standard für mobile Kommunikation, insbesondere 4G oder 5G, ausgebildet bzw. verwenden einen solchen.

Die Gateway-Einrichtung 3 kann gegebenenfalls auch mit wenigstens einem externen Kommunikationspartner 12 kommunizieren bzw. datenkommunikationsmäßig mit wenigstens einem externen Kommunikationspartner 12 verbunden werden. Bei einem externen Kommunikationspartner 12 kann es sich z. B. um einen Hersteller der Gateway-Einrichtung 3 und/oder um einen Bereitsteller der externen Datenspeichereinrichtung 6 und/oder um einen Bereitsteller der in der externen Datenspeichereinrichtung 6 gespeicherten Daten bzw. Datensätze DS handeln. Wie erwähnt, kann es sich bei Letzterem z. B. um den Hersteller der jeweiligen additiven Fertigungseinrichtung(en) 2.1 - 2.n und/oder um einen Entwickler von bestimmten in der Fertigungsumgebung 1 additiv zu fertigenden Bauteilen und/oder um einen Entwickler von bestimmte in der Fertigungsumgebung 1 additiv zu fertigende Bauteile betreffenden Baudaten handeln. Mithin kann über die Gateway-Einrichtung 3 z. B. eine Datenverbindung 13, beispielsweise zum Zwecke der Steuerung und/oder Überwachung des Betriebs wenigstens einer additiven Fertigungseinrichtung 2.1 - 2.n, mit wenigstens einem externen Kommunikationspartner 12 ausgebildet werden.

Es kann verfahrensgemäß eine entsprechende separate bzw. gesonderte Datenverbindung 5 ausgebildet bzw. verwendet werden, welche verschlüsselbar oder verschlüsselt ist. Durch die Ausbildung bzw. Verwendung einer entsprechenden verschlüsselbaren bzw. verschlüsselten Datenverbindung 5 kann die Sicherheit der zwischen der/den jeweiligen additiven Fertigungseinrichtung(en) 2.1 - 2.n und der externen Datenspeichereinrichtung 6 ausgebildeten Datenverbindung 5 verbessert werden. Insbesondere kann durch die Ausbildung bzw. Verwendung einer entsprechenden verschlüsselbaren bzw. verschlüsselten Datenverbindung die Sicherheit einer zwischen einer entsprechenden Gateway-Einrichtung, sofern vorhanden, und der jeweiligen externen Datenspeichereinrichtung ausgebildeten Datenverbindung verbessert werden. Zur Verschlüsselung kommt grundsätzlich jedwede Verschlüsselungsart in Betracht.

Die Gateway-Einrichtung 3 kann zur Verschlüsselung der separaten bzw. gesonderten Datenverbindung 5 eingerichtet sein. Die Verschlüsselung der separaten bzw. gesonderten Datenverbindung 5 zwischen der Gateway-Einrichtung 3 und der externen Datenspeichereinrichtung 6 kann sonach über die Gateway-Einrichtung 3 erfolgen. Die Gateway-Einrichtung 3 kann hierfür mit einer hardware- und/oder softwaremäßig implementierten Verschlüsselungseinrichtung ausgestattet sein.

Verfahrensgemäß kann über die externe Datenspeichereinrichtung 6 ein zertifizierter Datensatz, welcher von einem Bereitsteller für einen additiven Fertigungsprozess wenigstens eines bestimmten Bauteils definierter Bauteileigenschaften zertifizierte bauteilspezifische Parameter und/oder anlagenspezifische Parameter und/oder prozessspezifische Parameter beinhaltet, bereitgestellt werden. Ein entsprechender zertifizierter Datensatz beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils definierter Bauteileigenschaften erforderlich sind. Mit anderen Worten liegen in einem entsprechenden zertifizierten Datensatz sämtliche anlagenspezifischen und/oder bauteilspezifischen und/oder prozessspezifischen Informationen zur additiven Fertigung eines jeweiligen bestimmten Bauteils definierter Bauteileigenschaften, d. h. insbesondere auch maschinenlesbare Steuerinformationen zur Steuerung bzw. Regelung des Betriebs einer zur Durchführung eines additiven Fertigungsprozesses zur additiven Fertigung eines jeweiligen Bauteils definierter Bauteileigenschaften verwendeten additiven Fertigungseinrichtung, vor.

Wie erwähnt, ist die lokale Netzwerkumgebung 4 der Fertigungsumgebung 1 optional. Die vorstehenden Ausführungen gelten sonach analog für Konfigurationen einer entsprechenden Fertigungsumgebung 1 ohne lokale Netzwerkumgebung 4. Auch in einer solchen Konfiguration einer Fertigungsumgebung 1 ist durch die Verwendung einer separaten bzw. gesonderten Datenverbindung 5 zwischen jeweiligen additiven Fertigungseinrichtung 2.1 - 2.n eine sichere Übertragung von Daten bzw. Datensätzen DS von einer externen Datenspeichereinrichtung 6 auf die jeweiligen additiven Fertigungseinrichtungen 2.1 - 2.n möglich.

Fig. 2 zeigt eine Prinzipdarstellung einer Fertigungsumgebung 1 gemäß einem weiteren Ausführungsbeispiel.

Anhand des in Fig. 2 gezeigten Ausführungsbeispiels ist ersichtlich, dass eine entsprechende Gateway-Einrichtung 3 als Netzwerkgerät, d. h. als Router, ausgebildet oder einen Bestandteil eines solchen bilden kann, wobei die Gateway-Einrichtung 3 baulich in eine additive Fertigungseinrichtung 2.1 integriert ist.

Es kommen als Gateway-Einrichtungen 3 hier Router in Frage, welche zur Ausbildung von drahtlosen Datenverbindungen über einen Standard für mobile Kommunikation, insbesondere LTE, 4G oder 5G, eingerichtet sind. Entsprechenden Routern kann z. B. über eine Netzwerkkarte, SIM-Karte oder dergleichen, eine Information zur Identifikation des Routers oder der mit diesem ausgestatteten additiven Fertigungseinrichtung 2.1 zugeordnet sein. Ersichtlich kann ein entsprechender Router z. B. eine hardware- und/oder softwaremäßig implementierte Firewall-Einrichtung 10 und/oder eine hardware- und/oder softwaremäßig implementierte Datenspeichereinrichtung 7 umfassen. Prinzipiell ist auch eine entsprechende Steuerungseinrichtung 8 denkbar.

Ein entsprechender Router ist, wie erwähnt, baulich in die additive Fertigungseinrichtung 2.1 integriert, mithin an oder in der additiven Fertigungseinrichtung 2.1 angeordnet oder ausgebildet. Eine entsprechende bauliche Integration kann z. B. derart realisiert sein, dass an oder in einem Gehäuseabschnitt (nicht gezeigt) der jeweiligen additiven Fertigungseinrichtung 2.1, wie z. B. an oder in einer Bodenplatte, ein, z. B. kammerartiger bzw. -förmiger, Aufnahmebereich (nicht gezeigt) bzw. -raum ausgebildet ist, in welchem die entsprechende der Router angeordnet oder ausgebildet ist. Ein entsprechender Aufnahmebereich bzw. -raum kann zumindest abschnittsweise, gegebenenfalls vollständig, geschlossen ausgebildet sein, um den Router vor äußeren Einflüssen zu schützen. Ein entsprechender Aufnahmebereich bzw. -raum kann mit Befestigungsschnittstellen, d. h. insbesondere mechanischen Befestigungsschnittstellen, ausgeführt sein, welche eine (mechanisch) stabile Befestigung des Routers ermöglichen.

Eine entsprechend konfigurierte additive Fertigungseinrichtung 2.1 umfasst sonach neben den jeweiligen Funktionskomponenten zur Durchführung eines additiven Fertigungsvorgangs, welche je nach konkreter Konfiguration der additiven Fertigungsvorgang 2.1 respektive des mit dieser implementierbaren additiven Fertigungsprozesses variieren können, auch eine Gateway-Einrichtung 3 bzw. einen Router, über welche(n) sich eine gesonderte Datenverbindung zu bzw. mit einer externen Datenspeichereinrichtung 6 ausbilden bzw. herstellen lässt. Dies kann insbesondere automatisierbar bzw. automatisiert erfolgen, sodass die jeweilige additive Fertigungseinrichtung 2.1 eigenständig über die integrierte Gateway-Einrichtung 3 bzw. den Router eine gesonderte Datenverbindung zu bzw. mit einer externen Datenspeichereinrichtung 6 herstellt bzw. aufrechterhält.

Es kommen in diesem Zusammenhang Gateway-Einrichtungen 3 bzw. Router in Frage, welche zur Ausbildung von drahtlosen Datenverbindungen über einen Standard für mobile Kommunikation, insbesondere LTE, 4G oder 5G, eingerichtet sind. Derart kann die Datenverbindung zwischen der jeweiligen additiven Fertigungseinrichtung 2.1 und der externen Datenspeichereinrichtung 6 über eine gesonderte eigenständige und von einer lokalen Netzwerkumgebung 4 völlig unabhängige Datenverbindung ausgebildet bzw. hergestellt bzw. aufrechterhalten werden. Dies stellt einen erheblichen Sicherheitsgewinn, z. B. gegenüber Datendiebstahl, dar und vereinfacht, weil die Herstellung bzw. Aufrechterhaltung der Datenverbindung, wie erwähnt, automatisierbar bzw. automatisiert eigenständig über die additive Fertigungseinrichtung 2.1 erfolgen kann, die Einrichtung der additiven Fertigungseinrichtung 2.1, denn eine Integration dieser in eine bestehende (lokale) Netzwerkumgebung 4 ist weder erforderlich noch gewünscht.

Entsprechend konfigurierte additive Fertigungseinrichtungen 2.1 können sonach einzig einen Anschluss zur Energieversorgung aufweisen, ein, z. B. buchsenartiger bzw. -förmiger, Anschluss für ein Netzwerkkabel oder dergleichen ist nicht erforderlich.

## Patentansprüche

1. Verfahren zum Betrieb einer additiven Fertigungseinrichtung (2.1 - 2.n) einer eine oder mehrere additive Fertigungseinrichtungen (2.1 - 2.n) umfassenden Fertigungsumgebung (1), wobei den Betrieb der wenigstens einen additiven Fertigungseinrichtung (2.1 - 2.n) betreffende Daten von einer externen Datenspeichereinrichtung (6), insbesondere einer Netzwerkspeichereinrichtung, weiter insbesondere einer Cloud-Speichereinrichtung, über eine gesonderte Datenverbindung (5), die als eine drahtlose Datenverbindung ausgebildet ist, auf die wenigstens eine additive Fertigungseinrichtung (2.1 - 2.n) übertragen werden,
**dadurch gekennzeichnet, dass** die gesonderte Datenverbindung (5) zwischen der wenigstens einen additiven Fertigungseinrichtung (2.1 -2.n) und der externen Datenspeichereinrichtung (6) über eine zwischen die wenigstens eine additive Fertigungseinrichtung (2.1 - 2.n) und die externe Datenspeichereinrichtung (6) geschaltet angeordnete oder ausgebildete Gateway-Einrichtung (3) hergestellt wird, welche an oder in der wenigstens einen additiven Fertigungseinrichtung (2.1 - 2.n) angeordnet oder ausgebildet ist,
wobei die Gateway-Einrichtung (3) als Router ausgebildet ist, welcher zur Ausbildung der drahtlosen Datenverbindung über einen Standard für mobile Kommunikation eingerichtet ist, wobei die wenigstens eine additive Fertigungseinrichtung (2.1 - 2.n) automatisiert eigenständig über die Gateway-Einrichtung (3) die gesonderte Datenverbindung zu bzw. mit der externen Datenspeichereinrichtung (6) herstellt bzw. aufrechterhält,
wobei die drahtlose Datenverbindung zwischen der wenigstens einen additiven Fertigungseinrichtung (2.1 - 2.n) und der externen Datenspeichereinrichtung (6) ausgebildet wird, wobei die drahtlose Datenverbindung einen Standard für mobile Kommunikation verwendet.

2. Verfahren nach Anspruch 1, **dadurch gekennzeichnet, dass** die Fertigungsumgebung (1) über eine lokale Netzwerkumgebung (4) verfügt und die gesonderte Datenverbindung (5) eine zu der lokalen Netzwerkumgebung (4) gesonderte Datenverbindung ist.

3. Verfahren nach einem der vorhergehenden Ansprüche, **dadurch gekennzeichnet, dass** eine Firewall-Einrichtung (10) verwendet wird, insbesondere eine Firewall-Einrichtung (10), welche zwischen die wenigstens eine Gateway-Einrichtung (3) und die externe Datenspeichereinrichtung (6) geschaltet angeordnet oder ausgebildet ist.

4. Verfahren nach einem der vorhergehenden Ansprüche, **dadurch gekennzeichnet, dass** ein virtuelles privates Netzwerk zwischen der wenigstens einen additiven Fertigungseinrichtung (2.1 - 2.n) und der externen Datenspeichereinrichtung (6) ausgebildet wird.

5. Verfahren nach Anspruch 2 oder Anspruch und Anspruch 4, **dadurch gekennzeichnet, dass** die wenigstens eine Gateway-Einrichtung (3) eingerichtet ist, ein virtuelles privates Netzwerk zwischen der wenigstens einen additiven Fertigungseinrichtung (2.1 - 2.n) und der externen Datenspeichereinrichtung (6) auszubilden.

6. Verfahren nach einem der Ansprüche 2 bis 5, **dadurch gekennzeichnet, dass** über die wenigstens eine Gateway-Einrichtung (3) eine Datenverbindung, insbesondere zum Zwecke der Steuerung und/oder Überwachung des Betriebs der wenigstens einen additiven Fertigungseinrichtung (2.1 - 2.n), mit einem externen Kommunikationspartner (12) ausgebildet wird.

7. Verfahren nach einem der vorhergehenden Ansprüche, **dadurch gekennzeichnet, dass** die verwendete gesonderte Datenverbindung (5) verschlüsselbar oder verschlüsselt ist.

8. Verfahren nach einem der vorhergehenden Ansprüche, **dadurch gekennzeichnet, dass** über die externe Datenspeichereinrichtung (6) ein zertifizierter Datensatz, welcher von einem Bereitsteller für einen additiven Fertigungsprozess wenigstens eines bestimmten Bauteils definierter Bauteileigenschaften zertifizierte bauteilspezifische Parameter und/oder anlagenspezifische Parameter und/oder prozessspezifische Parameter beinhaltet, bereitgestellt wird.

9. Verfahren nach einem der vorhergehenden Ansprüche, **dadurch gekennzeichnet, dass** die Gateway-Einrichtung (3) baulich in die wenigstens eine additive Fertigungseinrichtung (2.1 - 2.n) integriert ist.

10. Fertigungsumgebung (1), umfassend wenigstens eine additive Fertigungseinrichtung (2.1 - 2.n), **gekennzeichnet durch** eine Gateway-Einrichtung (3), welche eingerichtet ist, eine gesonderte Datenverbindung (5), die als eine drahtlose Datenverbindung ausgebildet ist, mit einer externen Datenspeichereinrichtung (6), insbesondere einer Netzwerkspeichereinrichtung, weiter insbesondere einer Cloud-Speichereinrichtung, auszubilden, über welche den Betrieb der wenigstens einen additiven Fertigungseinrichtung (2.1 - 2.n) betreffende Daten von der externen Datenspeichereinrichtung (6) auf wenigstens eine additive Fertigungseinrichtung (2.1 - 2.n) der Fertigungsumgebung (1) übertragbar ist, wobei die Gateway-Einrichtung (3) eingerichtet ist, die drahtlose Datenverbindung zwischen der wenigstens einen additiven Fertigungseinrichtung (2.1 - 2.n) und der externen Datenspeichereinrichtung (6) auszubilden, wobei die Gateway-Einrichtung an oder in der wenigstens einen additiven Fertigungseinrichtung (2.1 - 2.n) angeordnet oder ausgebildet ist, wobei die Gateway-Einrichtung als Router ausgebildet ist, welcher zur Ausbildung von drahtlosen Datenverbindungen über einen Standard für mobile Kommunikation eingerichtet ist, wobei die wenigstens eine additive Fertigungseinrichtung (2.1 - 2.n) eingerichtet ist, eigenständig über die Gateway-Einrichtung (3) die gesonderte Datenverbindung zu bzw. mit der externen Datenspeichereinrichtung (6) automatisiert herzustellen bzw. aufrechtzuerhalten.

11. Fertigungsumgebung nach Anspruch 10, **dadurch gekennzeichnet, dass** die Gateway-Einrichtung (3) baulich in die wenigstens eine additive Fertigungseinrichtung (2.1 - 2.n) integriert ist.

12. Kommunikationssystem, umfassend:
- eine Fertigungsumgebung (1) nach Anspruch 10 oder 11,
- eine externe Datenspeichereinrichtung (6), in welcher den Betrieb der wenigstens einen additiven Fertigungseinrichtung (2.1 - 2.n) betreffende Daten hinterlegt sind.

13. Kommunikationssystem nach Anspruch 12, **dadurch gekennzeichnet, dass** die Gateway-Einrichtung (3) baulich in die wenigstens eine additive Fertigungseinrichtung (2.1 - 2.n) integriert ist.

## Claims

1. A method for operating an additive manufacturing device (2.1 - 2.n) of one or more additive manufacturing devices (2.1 - 2.n) comprising manufacturing environment (1), wherein the operation of the at least one additive manufacturing device (2.1 - 2.n) related data from an external data storage device (6), in particular a network storage device, further in particular a cloud storage device, via a separate data connection (5), which is formed as a wireless data connection, to which at least one additive manufacturing device (2.1 - 2.n) is transmitted, **characterized in that** the separate data connection (5) between the at least one additive manufacturing device (2.1 - 2.n) and the external data storage device (6) via an at least one additive manufacturing device (2.1 - 2.n) and the external data storage device (6) connected arranged or formed gateway device (3) is manufactured, which is arranged or formed on or in the at least one additive manufacturing device (2.1 - 2.n),
wherein the gateway device (3) is formed as a router, which is set up for forming the wireless data connection via a standard for mobile communication,wherein the at least one additive manufacturing device (2.1 - 2.n) automatically independently establishes or maintains the separate data connection to or with the external data storage device (6) via the gateway device (3),
wherein the wireless data connection between the at least one additive manufacturing device (2.1 -2.n) and the external data storage device (6) is formed, wherein the wireless data connection uses a standard for mobile communication.

2. The method of claim 1, **characterized in that** the manufacturing environment (1) has a local network environment (4) and the separate data connection (5) is a data connection separate from the local network environment (4).

3. The method according to one of the preceding claims, **characterized in that** a firewall device (10) is used, in particular a firewall device (10), which is arranged or formed switched between the at least one gateway device (3) and the external data storage device (6).

4. The method according to one of the preceding claims, **characterized in that** a virtual private network between the at least one additive manufacturing device (2.1 - 2.n) and the external data storage device (6) is formed.

5. The method of claim 2 or claim and claim 4, **characterized in that** the at least one gateway device (3) is set up to form a virtual private network between the at least one additive manufacturing device (2.1 - 2.n) and the external data storage device (6).

6. The method according to one of claims 2 to 5, **characterized in that** via the at least one gateway device (3) a data connection, in particular for the purpose of controlling and / or monitoring the operation of the at least one additive manufacturing device (2.1 - 2.n), with an external communication partner (12) is formed.

7. The method according to one of the preceding claims, **characterized in that** the used separate data connection (5) is encryptable or encrypted.

8. The method according to one of the preceding claims, **characterized in that** via the external data storage device (6) a certified data set, which includes certified component-specific parameters and / or plant-specific parameters and / or process-specific parameters certified by a provider for an additive manufacturing process of at least one specific component defined component properties, is provided.

9. The method according to one of the preceding claims, **characterized in that** the gateway device (3) is structurally integrated into the at least one additive manufacturing device (2.1 - 2.n).

10. A manufacturing environment (1), comprising at least one additive manufacturing device (2.1 -2.n), **characterized by** a gateway device (3), which is configured to form a separate data connection (5), which is formed as a wireless data connection, with an external data storage device (6), in particular a network storage device, further in particular a cloud storage device, via which the operation of the data relating to at least one additive manufacturing device (2.1 - 2.n) from the external data storage device (6) to at least one additive manufacturing device (2.1 - 2.n) of the manufacturing environment (1) is transferable, wherein the gateway device (3) is configured to form the wireless data connection between the at least one additive manufacturing device (2.1 - 2.n) and the external data storage device (6), wherein the gateway device is arranged or formed on or in the at least one additive manufacturing device (2.1 - 2.n), wherein the gateway device is designed as a router, which is set up for the formation of wireless data connections via a standard for mobile communication, wherein the at least one additive manufacturing device (2.1 - 2.n) is set up to automatically establish or maintain the separate data connection to or with the external data storage device (6) independently via the gateway device (3).

11. The manufacturing environment according to claim 10, **characterized in that** the gateway device (3) is structurally integrated into the at least one additive manufacturing device (2.1 - 2.n).

12. A communication system, comprehensive:
- a manufacturing environment (1) according to claim 10 or 11,
- an external data storage device (6) in which the operation of at least one additive manufacturing device (2.1 - 2.n) data are stored.

13. The communication system according to claim 12, **characterized in that** the gateway device (3) is structurally integrated into the at least one additive manufacturing device (2.1 - 2.n).

## Revendications

1. Une procédé d'exploitation d'une installation de fabrication additive (2.1 - 2.n) d'un ou de plusieurs équipements de fabrication additive (2.1 - 2.n) comprenant un environnement de fabrication (1), dans lequel les données relatives à au moins une installation de fabrication additive (2.1 - 2.n) sont transférées d'une installation de stockage de données externe (6), en particulier d'une installation de stockage en réseau, en particulier d'une installation de stockage en nuage, via une connexion de données distincte (5) conçue comme une connexion de données sans fil vers laquelle au moins une installation de fabrication additive (2.1 - 2.n) est transférée, **caractérisée en ce que** la connexion de données distincte (5) est établie entre au moins une installation de fabrication additive (2.1 - 2.n) et l'installation de stockage de données externe (6) par l'intermédiaire d'une connexion de données interconnectée ou formée entre au moins une installation de fabrication additive (2.1 - 2.n) et l'installation de stockage de données externe (6), qui est installée ou formée dans au moins une installation de fabrication additive (2.1 - 2.n),
où le dispositif de passerelle (3) est conçu comme un routeur configuré pour former la connexion de données sans fil via une norme de communication mobile, où au moins un dispositif de fabrication additive (2.1 - 2.n) établit ou maintient de manière autonome et automatisée via le dispositif de passerelle (3) la connexion de données séparée vers ou avec le dispositif de stockage de données externe (6),
où la connexion de données sans fil est établie entre au moins un dispositif de fabrication additive (2.1 - 2.n) et le dispositif de stockage de données externe (6), la connexion de données sans fil utilisant une norme de communication mobile.

2. La procédé selon la revendication 1, **caractérisé en ce que** l'environnement de fabrication (1) dispose d'un environnement réseau local (4) et que la connexion de données séparée (5) est une connexion de données séparée de l'environnement réseau local (4).

3. La procédé selon l'une quelconque des revendications précédentes, **caractérisé en ce qu'un** dispositif de pare-feu (10) est utilisé, en particulier un dispositif de pare-feu (10) placé ou formé entre au moins un dispositif de passerelle (3) et le dispositif de stockage de données externe (6).

4. La procédé selon l'une quelconque des revendications précédentes, **caractérisé en ce qu'un** réseau privé virtuel est formé entre au moins un dispositif de fabrication additive (2.1 - 2.n) et le dispositif externe de stockage de données (6).

5. La procédé selon la revendication 2 ou la revendication et la revendication 4, **caractérisé en ce qu'au** moins un dispositif de passerelle (3) est mis en place pour former un réseau privé virtuel entre au moins un dispositif de fabrication additive (2.1 - 2.n) et le dispositif de stockage de données externe (6).

6. La procédé selon l'une quelconque des revendications 2 à 5, **caractérisé en ce que, par l'intermédiaire d'au** moins un dispositif de passerelle (3), une liaison de données est établie, notamment à des fins de commande et/ou de surveillance du fonctionnement d'au moins un dispositif de fabrication additive (2.1 - 2.n), avec un partenaire de communication externe (12).

7. La procédé selon l'une quelconque des revendications précédentes, **caractérisé en ce que** la connexion de données séparée (5) utilisée est cryptée ou cryptée.

8. La procédé selon l'une quelconque des revendications précédentes, **caractérisé en ce que, par l'intermédiaire** du dispositif externe de stockage de données (6), un jeu de données certifié comprenant des paramètres spécifiques à la pièce et/ou à l'installation et/ou des paramètres spécifiques au procédé, certifiés par un fournisseur pour un procédé de fabrication additive d'au moins un composant donné ayant des propriétés de composant définies, est mis à disposition.

9. La procédé selon l'une quelconque des revendications précédentes, **caractérisé en ce que** le dispositif passerelle (3) est intégré structurellement dans au moins un dispositif de fabrication additive (2.1 - 2.n).

10. Environnement de fabrication (1), comprenant au moins un dispositif de fabrication additive (2.1 - 2.n), **caractérisé par** un dispositif de passerelle (3), qui est mis en place pour former une connexion de données distincte (5), conçue comme une connexion de données sans fil, avec un dispositif de stockage de données externe (6), en particulier un dispositif de stockage en réseau, en particulier un dispositif de stockage en nuage, par l'intermédiaire duquel l'exploitation d'au moins un dispositif de fabrication additive (2.1 - 2.n) peut être transférée du dispositif de stockage de données externe (6) à au moins un dispositif de fabrication additive (2.1 - 2.n) de l'environnement de fabrication (1), le dispositif de passerelle (3) étant mis en place pour établir la connexion de données sans fil entre au moins un dispositif de fabrication additive (2.1 - 2.n) et le dispositif de stockage de données externe (6), le dispositif de passerelle étant placé ou formé sur ou dans au moins un dispositif de fabrication additive (2.1 - 2.n), le dispositif de passerelle étant conçu comme un routeur destiné à établir des connexions de données sans fil par l'intermédiaire d'une norme de communication mobile, avec au moins un dispositif de fabrication additive (2.1 - 2.n), établir ou maintenir de manière autonome, par l'intermédiaire du dispositif de passerelle (3), la connexion de données séparée vers ou avec le dispositif de stockage de données externe (6).

11. L'environnement de fabrication selon la revendication 10, **caractérisé en ce que** le dispositif passerelle (3) est intégré structurellement dans au moins un dispositif de fabrication additive (2.1 - 2.n).

12. Un système de communication, comprenant:
- un environnement de fabrication (1) selon la revendication 10 ou 11,
- un dispositif externe de stockage de données (6) dans lequel sont consignées les données relatives au fonctionnement d'au moins un dispositif de fabrication additive (2.1 - 2.n).

13. Le système de communication selon la revendication 12, **caractérisé en ce que** le dispositif de passerelle (3) est intégré structurellement dans au moins un dispositif de fabrication additive (2.1 - 2.n).
